# EUROPÄISCHE PATENTSCHRIFT

(11) **EP 2 775 026 B1**
(45) Veröffentlichungstag und Bekanntmachung des Hinweises auf die Patenterteilung: **09.11.2016**
(21) Anmeldenummer: 14157149.7
(22) Anmeldetag: 28.02.2014
(51) Int. Cl.: D06F 58/20, D06F 58/28

(54) **Vorrichtung und Verfahren zum Trocknen von Trocknungsgut**
Method and device for drying material to be dried
Dispositif et procédé de séchage de matières à sécher

(30) Priorität: 06.03.2013 DE 102013102183
(43) Veröffentlichungstag der Anmeldung: 10.09.2014
(73) Patentinhaber: Miele & Cie. KG, 33332 Gütersloh (DE)
(72) Erfinder: Dyballa, Christian, 31275 Lehrte (DE); Siepmann, Stefan, 33775 Versmold (DE); Reich, Matthias, 31275 Lehrte (DE); Malchus, Alexander, 33803 Steinhagen (DE); Böser, Elmar, 33332 Gütersloh (DE); Martin, Detlef, 31036 Eime (DE)

(56) Entgegenhaltungen:
- EP-A1- 2 147 999
- WO-A1-2008/077838
- WO-A1-2009/106150
- DE-A1-102007 017 600
- DE-A1-102008 019 921
- DE-C1- 10 255 575

## Beschreibung

Vorrichtung und Verfahren zum Trocknen von Trocknungsgut

Die Erfindung betrifft eine Vorrichtung zum Trocknen von Trocknungsgut, insbesondere einen gewerblichen Wäschetrockner, einen gewerblichen Geschirrspüler oder einen Reinigungs- und Desinfektionsautomaten, mit einer Kammer zur Aufnahme von Trocknungsgut, mit einer Prozessluftführung, bei der Prozessluft mittels einer Heizeinrichtung erwärmt und anschließend der Kammer zugeleitet wird, und dann aus der Kammer abgeleitet und anschließend in einer Kondensationseinrichtung gekühlt und dabei entfeuchtet wird, und mit einer Wärmepumpeneinrichtung, bei der Kältemittel im Kreislauf über einen Verdampfer, einen Verdichter, einen Verflüssiger und eine Drossel oder Kapillare geleitet wird, wobei die Kondensationseinrichtung den Verdampfer und die Heizeinrichtung den Verflüssiger enthält, und wobei die Wärmepumpeneinrichtung aus mindestens zwei Wärmepumpeneinheiten, umfassend jeweils einen Verdampfer (52), einen Verdichter (52), einen Verflüssiger (53) eine Drossel (54) oder Kapillare, besteht. Die Erfindung betrifft außerdem ein Verfahren zum Betreiben einer solchen Vorrichtung.

Sowohl eine Vorrichtung als auch ein Verfahren zum Trocknen von Trocknungsgut mittels einer Wärmepumpeneinrichtung ist beispielsweise aus der DE 44 09 607 A1 bekannt. Dabei handelt es sich bei der beschriebenen Vorrichtung um einen Haushaltswäschetrockner, bei dem zur Erwärmung und anschließenden Kühlung der Prozessluft eine Wärmepumpe eingesetzt wird. Eine solche Wärmepumpe beinhaltet einen Kältemittelkreislauf, in dem das Kältemittel im Kreislauf einen Verdampfer, einen Verdichter, einen Verflüssiger und eine Drossel durchströmt. Dabei wird im Verflüssiger thermische Energie freigesetzt, mit der die Prozessluft erwärmt wird, und im Verdampfer Kälte erzeugt, mit der die Prozessluft heruntergekühlt und dabei entfeuchtet wird. In Haushaltswäschetrocknern ist der Heiz- und Kühlungsbedarf relativ gering, da dort Programmlaufzeiten von einer Stunde und mehr in Kauf genommen werden. Deshalb können kostengünstige Massenartikel als Wärmepumpe eingesetzt werden, da die gleichen Baugruppen auch in Kühlschränken eingesetzt werden können. Bei gewerblichen Geräten mit Trocknungseinrichtungen sind kurze Programmlaufzeiten bei großen Mengen an Trocknungsgut gefordert. Deshalb sind große Heizleistungen und Kühlkapazitäten notwendig. Bisher ist es zu diesem Zweck bekannt, Sonderanfertigungen einzusetzen, die in geringen Stückzahlen und dementsprechend hohen Kosten verfügbar sind.

Die WO 2009/106150 A1 offenbart einen Wäschetrockner, bei dem die Verdichter und Verdampfer von zwei Wärmepumpeneinrichtungen nacheinander von der Prozessluft durchströmt werden. Hier sind lediglich die Kompressoren der Wärmepumpen, aber nicht die Prozessluft steuerbar.

Aus der EP 2 147999 A1 ist ein Haushalts-Wäschetrockner bekannt, bei dem zwei Wärmepumpeneinheiten derart kombiniert sind, dass der Verdampfer der zweiten Wärmepumpe und der Verflüssiger der ersten Wärmepumpe nacheinander von der Prozessluft durchflossen werden.

Die DE 31 04 566 A1 beschreibt eine Wärmepumpen-Heizungsanlage, bei der mehrere Wärmepumpen in Modulbauweise parallel betrieben werden.

Der Erfindung stellt sich somit das Problem, eine Vorrichtung zum Trocknen von Trocknungsgut der eingangs genannten Art zu offenbaren, bei der als Massenartikel gefertigte Wärmepumpen einsetzbar und damit Kosten einsparbar sind. Erfindungsgemäß wird dieses Problem durch eine Vorrichtung mit den Merkmalen des Patentanspruchs 1 gelöst. Vorteilhafte Ausgestaltungen und Weiterbildungen der Erfindung ergeben sich aus den nachfolgenden Unteransprüchen. Der Erfindung stellt sich außerdem das Problem, ein Verfahren zum Betreiben einer Vorrichtung zum Trocknen von Trocknungsgut der eingangs genannten Art zu offenbaren, bei welchem die Vorteile einer Verwendung einer Wärmepumpeneinrichtung mit mindestens zwei Wärmepumpeneinheiten ausgenutzt werden. Erfindungsgemäß wird dieses Problem durch eine Vorrichtung mit den Merkmalen des Patentanspruchs 4 gelöst. Vorteilhafte Ausgestaltungen und Weiterbildungen der Erfindung ergeben sich aus den nachfolgenden Unteransprüchen.

Mit der erfindungsgemäßen Ausbildung der Vorrichtung zum Trocknen von Trocknungsgut werden dadurch Vorteile erreicht, dass die Wärmepumpeneinrichtung aus mindestens zwei Wärmepumpeneinheiten besteht, die parallel von der Prozessluft durchströmt werden. Dabei soll mittels einer Verteileinrichtung die Menge der Prozessluft bestimmbar sein, die den Verdampfern der jeweiligen Wärmepumpeneinheiten zugeführt wird, und die Menge der Prozessluft änderbar sein, die den Verdampfern der jeweiligen Wärmepumpeneinheiten zugeführt wird. Hierdurch können einerseits konventionelle Wärmepumpen eingesetzt werden, welche als Massenartikel preisgünstig verfügbar sind. Durch die Verwendung von mehreren Wärmepumpeneinheiten kann zudem im Fehlerfall bei Ausfall einer Einheit der Trockenprozess mit den verbliebenen funktionstüchtigen Einheiten fortgesetzt werden. Dadurch wird der im Gewerbe besonders wichtigen Ausfallsicherheit der Anlagen Rechnung getragen. Durch die parallele Durchströmung der Wärmepumpeneinheiten von der Prozessluft und die dadurch mögliche Verwendung einer Verteileinrichtung, mittels der die Menge der Prozessluft, die den Verdampfern der jeweiligen Wärmepumpeneinheiten zugeführt wird, bestimmbar ist, insbesondere bei einer gleichmäßigen Aufteilung der Prozessluft auf die einzelnen Einheiten, erfolgt eine optimale Ausnutzung der benötigten Energie. Durch die Querschnittserweiterung im Bereich der parallel betriebenen Wärmepumpeneinheiten wird zudem der Gesamtgegendruck im System reduziert und gleichzeitig die Geschwindigkeit der Prozessluft an den Wärmetauschern (Kondensationseinrichtung und Heizeinrichtung) reduziert, so dass es zu einer längeren Kontaktzeit zwischen Luft und Wärmetauscher kommt, was den Wärmeübergang positiv beeinflusst. Eine Regelbarkeit der Heizleistung ist bei Trocknungseinrichtungen mit Elektroheizkörpern Stand der Technik und relativ preisgünstig erreichbar. Bei Trocknungseinrichtungen mit herkömmlichen Wärmepumpen ist dies bisher nur über kostenintensive regelbare Kompressoren realisierbar. Durch die modulare Gestaltung mit mehreren Wärmepumpeneinheiten kann eine stufenweise Regelung über das Zu- und Abschalten ganzer Kreisläufe und/oder die Änderung der zugeführten Prozessluftmenge kostengünstig realisiert werden.

Das erfindungsgemäße Verfahren zum Betreiben einer Vorrichtung zum Trocknen von Trocknungsgut ist unter anderen definiert durch die Verwendung einer Wärmepumpeneinrichtung mit mindestens zwei Wärmepumpeneinheiten, welche in Abhängigkeit von einem eingestellten Programm, und/oder einer eingestellten oder ermittelten Beladungsmenge, und/oder einer eingestellten oder ermittelten Beladungsart, und/oder einer ermittelten Restfeuchte gesteuert werden und dadurch, dass die Prozessluftzufuhr zu einem Verdampfer einer deaktivierten Wärmepumpeneinheit wenigstens teilweise gesperrt ist. Wie bereits zuvor beschrieben, ist es vorteilhaft, wenn die Wärmepumpeneinrichtung hinsichtlich der Anzahl der aktivierten Wärmepumpeneinheiten gesteuert wird. Über die Steuerung in Abhängigkeit von einem eingestellten Programm soll dem Benutzer die Möglichkeit gegeben werden, die Programme in ihrer Gewichtung zwischen Laufzeit und Energiebedarf zu variieren. So werden im "Energiesparmodus" nur wenige Einheiten bis hin zu einer einzigen Einheit zugeschaltet, um die maximale Energieersparnis zu genieren. Dies wird sich in Richtung einer längeren Programmlaufzeit auswirken. Alternativ dazu kann ein zeitoptimierter Modus das Zuschalten mehrerer bis hin zu allen Kältekreisläufen zur Folge haben, was die Programmdauer erheblich verkürzt, dafür aber einen höheren Energieverbrauch zur Folge hat. Verschiedene Zwischenstufen sind je nach Anzahl der Kältekreisläufe auch möglich.

Außerdem ist es vorteilhaft, wenn die Leistung eines Gebläses zur Umwälzung der Prozessluft steuerbar ist. Hierdurch kann die Menge der im Kreislauf befindlichen Prozessluft an die Anzahl der aktivierten Wärmepumpeneinheiten angepasst werden und es wird der Wärmeübergang an den Wärmetauschern optimiert.

Um den Wäschefall durch den Luftstrom zu optimieren, ist es vorteilhaft, wenn die Drehzahl der Trocknertrommel steuerbar ist.

Ein Ausführungsbeispiel der Erfindung ist in den Zeichnungen rein schematisch dargestellt und wird nachfolgend näher beschrieben. Es zeigt
- Figur 1: das Blockschaltbild eines erfindungsgemäßen Wäschetrockners,
- Figur 2: eine Wärmepumpeneinheit des Wäschetrockners,
- Figur 3: einen Prozessluftverteiler des Wäschetrockners.

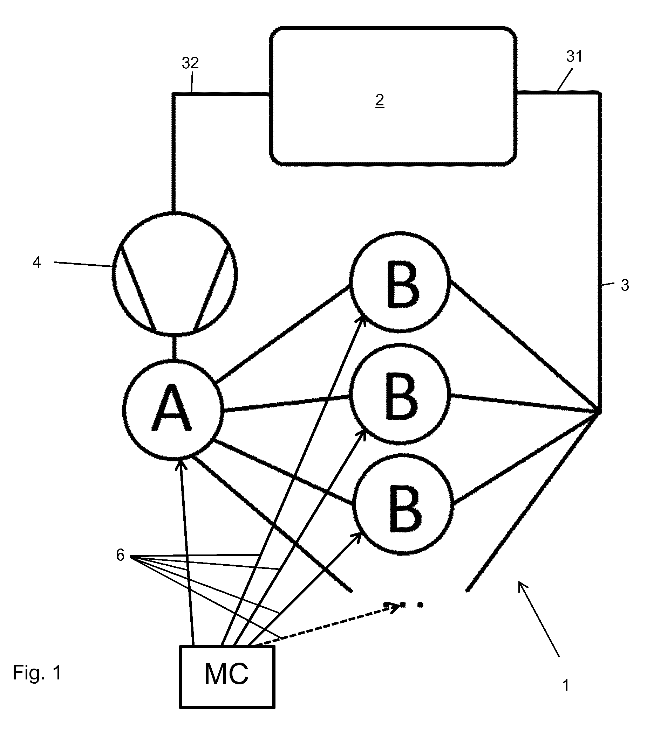

Im Folgenden ist eine erfindungsgemäße Vorrichtung zum Trocknen von Trocknungsgut am Beispiel eines gewerblichen Wäschetrockners 1 beschrieben. Die Figur 1 zeigt in Blockschaltbilddarstellung die Teile, die für die erfindungsgemäße Funktion eines solchen Trockners 1 notwendig sind. Der Trockner 1 besitzt in bekannter Weise eine drehbare Trommel 2 zur Aufnahme von Wäsche (nicht dargestellt). Dieser Trommel 2 wird erwärmte Prozessluft 31 zugeleitet, die über die Wäsche streicht und aus dieser die Feuchtigkeit aufnimmt. Die feuchtigkeitsbeladene Prozessluft 32 wird anschließend aus der Trommel abgeleitet und in einer Kondensationseinrichtung abgekühlt. Dabei kondensiert die Feuchtigkeit aus der Prozessluft 3. Anschließend erfolgt eine erneute Erwärmung und Zuleitung zur Trommel 2. Für die Umwälzung der Prozessluft 3 im Kreislauf ist ein Gebläse 4 vorgesehen. Die Funktion des Erwärmens und des Kondensierens übernimmt eine Wärmepumpeneinrichtung. Dabei ist in der Figur 1 erkennbar, dass diese Einrichtung aus mehreren parallel geschalteten Wärmepumpeneinheiten B besteht. Den Einheiten B ist ein Prozessluftverteiler A vorgeschaltet. Die Figur 1 zeigt außerdem, dass sowohl der Prozessluftverteiler A als auch die einzelnen Wärmepumpeneinheiten B von einer Steuereinrichtung MC gesteuert werden. Dies ist mittels der Pfeile 6 als Wirklinien angedeutet. Die Anzahl der verwendeten Wärmepumpeneinheiten B kann an die Füllkapazität des Trockners angepasst werden. Erfindungsgemäß werden mindestens zwei Einheiten eingesetzt, nach oben sind keine Grenzen gesetzt.

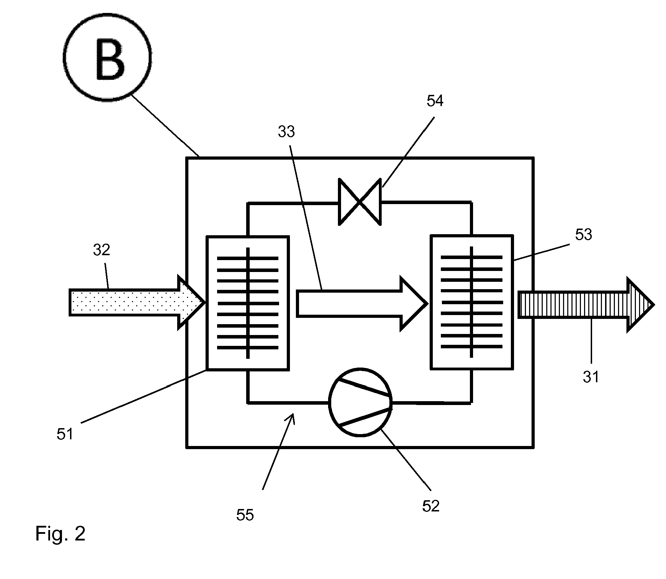

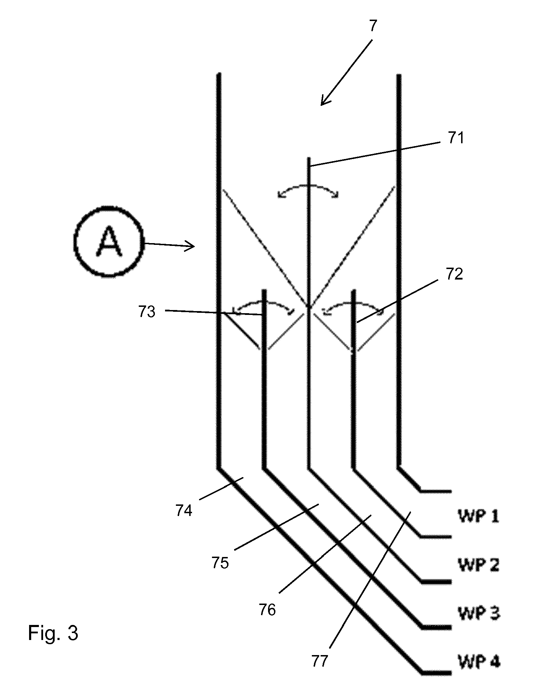

Figur 2 zeigt die Funktionsweise einer einzelnen Wärmepumpeneinheit B. Diese umfasst einen Verdampfer 51, einen Verdichter 52, einen Verflüssiger 53 und eine Drossel 54 oder Kapillare. Diese Teile sind durch ein Leitungssystem miteinander verbunden, so dass ein Kältemittelkreislauf 55 entsteht, in dem ein geeignetes Kältemittel mittels des Verdichters zirkuliert wird. In der Figur ist angedeutet, dass die warme, feuchtigkeitsbeladene Prozessluft (Pfeil 32) zunächst über den kalten Verdampfer 51 geleitet wird. Dieser fungiert als Kondensationseinrichtung, wobei aufgrund der vom Verdampfer 51 erzeugten Kälte die Luft 32 abgekühlt wird und dadurch die Feuchtigkeit auskondensiert. Die nunmehr trockene kalte Luft (Pfeil 33) wird dem heißen Verflüssiger 53 der Wärmepumpeneinheit B zugeleitet und wieder erwärmt. Anschließend wird die trockene warme Luft (Pfeil 31) wieder der Trommel 2 zugeleitet. Figur 3 zeigt den Teil der Prozessluftleitung 7, der strömungsmäßig den Wärmepumpeneinheiten B vorangestellt ist. Dieser Teil enthält einen Prozessluftverteiler A, bei dem die Prozessluft mit Hilfe umschaltbarer Klappen 71 bis 73 und nachgeordneter Teilkanäle 74 bis 77 auf jede der vorhandenen Wärmepumpeneinheiten (hier anstatt B mit WP1, WP2, WP3 und WP4 bezeichnet) geleitet werden kann, so dass diese einzeln oder in beliebiger Kombination miteinander betrieben werden können. Dargestellt ist ein Prozessluftverteiler A für vier Wärmepumpeneinheiten (hier anstatt B mit WP1, WP2, WP3 und WP4 bezeichnet). In der dargestellten Position nehmen die Klappen 71 bis 73 eine mittige Einstellung ein, so dass alle vier Einheiten WP1, WP2, WP3 und WP4 betrieben werden. Dabei ist es vorteilhaft, wenn die Klappen 71 bis 73 und ihre Stellung strömungstechnisch derart optimiert sind, dass die Prozessluft sich gleichmäßig auf alle Wärmepumpeneinheiten WP1, WP2, WP3 und WP4 verteilt. Anstelle von Klappen 71 bis 73 können Drosseln oder andere Elemente zur Lenkung oder Einstellung der Prozessluft verwendet werden.

Mit Hilfe der gezeigten Vorrichtung können dem Benutzer Programme zur Verfügung gestellt werden, die hinsichtlich verschiedener Anforderungen optimiert sind. Dabei ist es insbesondere möglich, die Programme in ihrer Gewichtung zwischen Laufzeit und Energiebedarf zu variieren. So werden im "Energiesparmodus" nur wenige bis hin zu einer einzigen Einheit betrieben, um die maximale Energieersparnis zu genieren. Der Benutzer muss dann eine längere Programmlaufzeit in Kauf nehmen. Alternativ dazu kann ein zeitoptimierter Modus das Zuschalten mehrerer bis hin zu allen Einheiten zur Folge haben, was die Programmdauer erheblich verkürzt, sich dafür in puncto höheren Energieverbrauch auswirkt. Verschiedene Zwischenstufen sind je nach Anzahl der Kältekreisläufe auch möglich. Parallel oder alternativ dazu soll die Steuereinrichtung MC die Prozessparameter und/oder andere Benutzereinstellungen überwachen und den Trockenprozess optimieren durch
- angepasste Anzahl der aktivierten Wärmepumpeneinheiten,
- Anpassung der Trommeldrehzahl,
- Anpassung der Leistung des Prozessluftgebläses,
- Lenkung des Prozessluftstroms nur über aktivierte Wärmepumpeneinheiten.

Durch eine solche Steuerung wird bei jeder Beladungsmenge, Beladungsart und Anfangsrestfeuchte der optimale Trockenprozess durchgeführt, der ein Minimum an Energie und Zeit erfordert oder die Gewichtung in Abhängigkeit des Kundenwunsches entsprechend gestaltet.

Die Steuereinrichtung MC kann auch die Wärmepumpeneinheiten selbst überwachen. Sollte durch zu hohe Verschmutzung, zu geringe Prozessluft oder Ähnliches eine Überhitzung im Kältemittelkreislauf drohen, schaltet die Steuereinrichtung diese Einheit ab, ohne die parallelen Einheiten zu beeinflussen.

## Patentansprüche

1. Vorrichtung zum Trocknen von Trocknungsgut, insbesondere gewerblicher Wäschetrockner (1), gewerblicher Geschirrspüler oder Reinigungs- und Desinfektionsautomat, mit einer Kammer zur Aufnahme von Trocknungsgut, mit einer Prozessluftführung, bei der Prozessluft mittels einer Heizeinrichtung erwärmt und anschließend der Kammer zugeleitet wird, und dann aus der Kammer abgeleitet und anschließend in einer Kondensationseinrichtung gekühlt und dabei entfeuchtet wird, und mit einer Wärmepumpeneinrichtung, bei der Kältemittel im Kreislauf über einen Verdampfer (51), einen Verdichter (52), einen Verflüssiger (53) und eine Drossel (54) oder Kapillare geleitet wird, wobei die Kondensationseinrichtung den Verdampfer (51) und die Heizeinrichtung den Verflüssiger (53) enthält, und wobei die Wärmepumpeneinrichtung aus mindestens zwei Wärmepumpeneinheiten (B) umfassend jeweils einen Verdampfer (51), einen Verdichter (52), einen Verflüssiger (53), eine Drossel (54) oder Kapillare besteht, **dadurch gekennzeichnet, dass** die Wärmepumpeneinheiten (B) parallel von der Prozessluft (3) durchströmt werden, dass mittels einer Verteileinrichtung (A), die innerhalb eines den Wärmpumpeneinheiten (B) vorangestellten Teils einer Prozessluftleitung (7) der Prozessluftführung angeordnet ist, die Menge der Prozessluft (3), die den Verdampfern (51) der jeweiligen Wärmepumpeneinheiten (B) zugeführt wird, bestimmbar ist und dass durch die Verteileinrichtung (A) die Menge der Prozessluft (3) änderbar ist, die den Verdampfern (51) der jeweiligen Wärmepumpeneinheiten (B) zuführbar ist.

2. Vorrichtung nach Anspruch 1,
**dadurch gekennzeichnet,**
**dass** durch die Verteileinrichtung (A) jeweils gleiche Mengen an Prozessluft (3) zu den Verdampfern (51) der jeweiligen Wärmepumpeneinheit (B) zuführbar ist.

3. Vorrichtung nach mindestens einem der vorhergehenden Ansprüche,
**gekennzeichnet durch** eine Steuereinrichtung (MC), mittels der einzelne Wärmepumpeneinheiten (B) abschaltbar sind.

4. Verfahren zum Betreiben einer Vorrichtung zum Trocknen von Trocknungsgut nach einem der vorhergehenden Ansprüche, wobei die mindestens zwei Wärmepumpeneinheiten (B) in Abhängigkeit von einem eingestellten Programm, und/oder einer eingestellten oder ermittelten Beladungsmenge, und/oder einer eingestellten oder ermittelten Beladungsart, und/oder einer ermittelten Restfeuchte gesteuert werden **dadurch gekennzeichnet,**
**dass** die Wärmepumpeneinrichtung hinsichtlich der Anzahl der aktivierten Wärmepumpeneinheiten (B) dadurch gesteuert wird, dass die Prozessluftzufuhr zu einem Verdampfer (51) einer deaktivierten Wärmepumpeneinheit wenigstens teilweise gesperrt ist.

5. Verfahren nach Anspruch 4,
**dadurch gekennzeichnet,**
**dass** die Leistung eines Gebläses (4) zur Umwälzung der Prozessluft (3) steuerbar ist.

6. Verfahren zum Betreiben eines gewerblichen Wäschetrockners (1) mit einer drehbaren Trocknertrommel (2) nach einem der Ansprüche 4 oder 5,
**dadurch gekennzeichnet,**
**dass** die Drehzahl der Trocknertrommel (2) steuerbar ist.

## Claims

1. Appliance for drying articles to be dried, in particular a commercial tumble dryer (1), a commercial dishwasher or automatic cleaning and disinfection machine, comprising a chamber for receiving articles to be dried, a process air duct, in which process air is heated by means of a heating device and subsequently fed to the chamber, said air then being conducted out of the chamber and subsequently cooled in a condensation device and thereby dehumidified, and comprising a heat pump device, in which cooling agent is conveyed in the circuit via an evaporator (51), a compressor (52), a condenser (53) and a throttle (54) or a capillary, the condensation device containing the evaporator (51) and the heating device containing the condenser (53), and the heat pump device consisting of at least two heat pump units (B) each comprising an evaporator (51), a compressor (52), a condenser (53), a throttle (54) or a capillary,
**characterised in that**
the process air (3) flows through each of the heat pump units (B) at the same time, **in that** the amount of process air (3) which is supplied to the evaporators (51) of each of the heat pump units (B) can be determined by means of a distribution device (A) that is arranged inside part of a process air line (7) of the process air duct, which part is provided upstream of the heat pump units (B), and **in that** the amount of process air (3) that can be supplied to the evaporators (51) of the respective heat pump units (B) can be modified by the distribution device (A).

2. Appliance according to claim 1, **characterised in that** equal amounts of process air (3) can be supplied to the evaporators (51) of the respective heat pump units (B) by means of the distribution device (A) in each case.

3. Appliance according to at least one of the preceding claims, **characterised by** a control device (MC) by means of which the individual heat pump units (B) can be switched off.

4. Method for operating an appliance for drying articles to be dried according to any of the preceding claims, the at least two heat pump units (B) being controlled on the basis of a set program, and/or a set or detected load size, and/or a set or detected load type, and/or detected residual moisture, **characterised in that** the heat pump device is controlled with regard to the number of activated heat pump units (B) such that the supply of process air to an evaporator (51) of a deactivated heat pump unit is blocked at least in part.

5. Method according to claim 4, **characterised in that** the power of a fan (4) for circulating the process air (3) can be controlled.

6. Method for operating a commercial tumble dryer (1) having a rotatable dryer drum (2) according to either claim 4 or claim 5, **characterised in that** the rotational speed of the dryer drum (2) can be controlled.

## Revendications

1. Dispositif destiné au séchage d'articles à sécher, en particulier sèche-linge professionnel (1), lave-vaisselle ou appareil automatique de nettoyage et de désinfection professionnel, avec une chambre pour la réception d'articles à sécher, avec un guidage d'air de process, dans lequel de l'air de process est chauffé au moyen d'un système de chauffage et ensuite conduit à la chambre, et puis est évacué de la chambre et ensuite refroidi dans un système de condensation et déshumidifié à cette occasion, et avec un système de pompe à chaleur dans lequel du réfrigérant est conduit dans le circuit par le biais d'un évaporateur (51), d'un compresseur (52), d'un condenseur (53) et d'un restricteur (54) ou capillaire, dans lequel le système de condensation contient l'évaporateur (51) et le système de chauffage contient le condenseur (53), et dans lequel le système de pompe à chaleur se compose d'au moins deux unités de pompe à chaleur (B) comprenant respectivement un évaporateur (51), un compresseur (52), un condenseur (53), un restricteur (54) ou capillaire,
**caractérisé en ce que**
les unités de pompe à chaleur (B) sont parcourues en parallèle par l'air de process (3),
**en ce que**, au moyen d'un système de distribution (A) qui est disposé à l'intérieur d'une partie d'une conduite d'air de process (7) du guidage d'air de process qui est en amont des unités de pompe à chaleur (B), la quantité de l'air de process (3) qui est acheminé aux évaporateurs (51) des unités de pompe à chaleur (B) respectives peut être déterminée, et **en ce que**, par le système de distribution (A), la quantité de l'air de process (3) qui est acheminé aux évaporateurs (51) des unités de pompe à chaleur (B) respectives peut être modifiée.

2. Dispositif selon la revendication 1, **caractérisé en ce que**, par le système de distribution (A), des quantités respectivement égales d'air de process (3) peuvent être acheminées aux évaporateurs (51) des unités de pompe à chaleur (B) respectives.

3. Dispositif selon au moins l'une des revendications précédentes, **caractérisé par** un dispositif de commande (MC) au moyen duquel des unités de pompe à chaleur (B) individuelles peuvent être mises à l'arrêt.

4. Procédé de fonctionnement d'un dispositif destiné au séchage d'articles à sécher selon l'une des revendications précédentes, dans lequel les unités de pompe à chaleur (B) au moins au nombre de deux sont commandées en fonction d'un programme réglé, et/ou d'une quantité de chargement réglée ou déterminée et/ou d'un type de chargement réglé ou déterminé et/ou d'une humidité résiduelle déterminée, **caractérisé en ce que** le système de pompe à chaleur est, en ce qui concerne le nombre d'unités de pompe à chaleur (B) activées, commandé **en ce que** l'amenée d'air de process vers un évaporateur (51) d'une unité de pompe à chaleur désactivée est bloquée au moins partiellement.

5. Procédé selon la revendication 4, **caractérisé en ce que** la puissance d'un ventilateur (4) destiné à la circulation de l'air de process (3) peut être commandée.

6. Procédé de fonctionnement d'un sèche-linge (1) professionnel avec un tambour de sécheur (2) rotatif selon l'une des revendications 4 ou 5, **caractérisé en ce que** la vitesse de rotation du tambour de sécheur (2) peut être commandée.
